# EUROPÄISCHE PATENTSCHRIFT

(11) **EP 3 079 976 B1**
(45) Veröffentlichungstag und Bekanntmachung des Hinweises auf die Patenterteilung: **10.01.2018**
(21) Anmeldenummer: 14806184.9
(22) Anmeldetag: 28.11.2014
(51) Int. Cl.: B62D 35/00

(54) **HECKSPOILEREINRICHTUNG FÜR EIN FAHRZEUG**
REAR SPOILER DEVICE FOR A VEHICLE
SYSTÈME DE BECQUET ARRIÈRE POUR VÉHICULE

(30) Priorität: 11.12.2013 DE 102013020886
(43) Veröffentlichungstag der Anmeldung: 19.10.2016
(73) Patentinhaber: WABCO Europe BVBA, 1160 Brussels (BE)
(72) Erfinder: DIECKMANN, Thomas, 30982 Pattensen (DE); VAN RAEMDONCK, Gandert, Marcel, Rita, NL-2611 PW Delft (NL); ZIELKE, Frank, 30890 Barsinghausen (DE)
(74) Vertreter: Lauerwald, Jörg
(86) Internationale Anmeldenummer: PCT/EP2014/003193
(87) Internationale Veröffentlichungsnummer: WO 2015/086120

(56) Entgegenhaltungen:
- DE-A1-102011 107 366
- US-A1- 2013 106 136

## Beschreibung

Die Erfindung betrifft eine Heckspoilereinrichtung für ein Fahrzeug, insbesondere ein Nutzfahrzeug, z. B. einen LKW, wobei das Fahrzeug mindestens eine Hecktüre, insbesondere zwei Hecktüren aufweist. Die Heckspoilereinrichtung ist insbesondere für ein Fahrzeug mit im Wesentlich kastenförmigen Aufbau bzw. Seitenwänden, Dach und diese nach hinten rechtwinklig abschließenden Hecktüren geeignet.

Die WO 2012/051134 A1 und WO 2011/153185 A1 beschreiben Heckspoilersysteme, bei denen u. a. Luftleitflächen an den Seitenwänden angebracht werden, die sich über einen Teil der vertikalen Höhe des kastenförmigen Aufbaus erstrecken; ergänzend sind entsprechende Luftleitflächen am Dach angebracht. Die Luftleitflächen hintergreifen hierbei das stumpfe Ende des kastenförmigen Aufbaus. Die Außenfläche der Luftleitflächen läuft von der vorderen Kante jeder Luftleitfläche nach hinten zunächst quer nach außen bzw. vertikal nach oben, wodurch der Gesamt-Querschnitt des Fahrzeugs vergrößert wird, und hinter der Heckfläche des Fahrzeugs etwas nach innen. Die Luftleitflächen liegen hierbei fest an den planen Seitenflächen bzw. der planen Oberfläche des kastenförmigen Aufbaus.

Die US 2013/0106136 A1 beschreibt ein Heckspoilersystem, das auf der Dachfläche angebracht ist, an seinem vorderen Ende auf der Dachfläche anliegt und nachfolgend mit einer Krümmung nach oben verläuft, um eine hintere Kante des Hecktür-Rahmens zu überdecken. Hierbei liegt das Luftleitelement auf dieser Kante auf. Auch die US 2013/0076064 A1 zeigt ein derartiges System, bei dem Luftleitflächen an der Dachfläche und den Seitenflächen angebracht sind, wobei die Luftleitflächen verstellbar, insbesondere einfahrbar und ausfahrbar sind.

Die Luftleitflächen liegen somit im Allgemeinen an den Seitenflächen oder der Dachfläche des kastenförmigen Aufbaus an, z. T ergänzend an der hinteren Kante, um sich dort abzustützen.

Die DE 10 2009 014 860 A1 zeigt eine Heckspoilereinrichtung mit Verstelleinrichtung. Sie weist Luftleitelemente zur Konturverlängerung und aerodynamischen Luftleitung der Seitenwände und des Dachs auf, die in einer Grundstellung zu den Hecktüren hin eingeklappt und in der Fahrstellung bzw. Gebrauchsstellung aufgerichtet oder ausgefahren sind und hierbei an Befestigungselementen einer heckseitigen Fahrzeugkante abgestützt sind. Derartige Heckspoiler dienen der Verbesserung der Aerodynamik des Fahrzeugs und können den Kraftstoffverbrauch entsprechend senken.

Die DE 20 2009 014 476 U1, DE 20 2009 014 510 U1 und
DE 20 2009 015 009 U1 zeigen weitere Heckspoilereinrichtungen, bei denen die Luftleitelemente bzw. Spoilerelemente verschiebbar oder schwenkbar angeordnet sind, um ein ungestörtes Öffnen der Hecktüren zu ermöglichen.

Weiterhin sind Heckspoiler bekannt, die an Scharnieren der Hecktüre angebunden sind. Die DE 102 28 658 A1 zeigt verschiedene Klapplösungen, bei denen über ein Scharnier schwenkbare Planflächen im Fahrbereich eine aerodynamische Optimierung ermöglichen sollen.

Derartige Anbindungen der Luftleitelemente im Scharnierbereich sind jedoch im Allgemeinen aufwändig und auf spezielle Scharnier-Ausbildungen beschränkt. Weiterhin sind die einsetzbaren Luftleitelemente im Allgemeinen in ihrer Länge begrenzt. Bei einem Aufschwenken der Hecktüre um 270° nach vorne können komplexere Heckspoilerausbildungen, insbesondere bei Anwendung im Scharnierbereich, den Aufschwenkvorgang oftmals beeinträchtigen.

Weiterhin ist die Bedienung für den Verstellvorgang von der Grundstellung in die Fahrstellung sowie auch für die Rückverstellung im Allgemeinen aufwändig. Ergänzend sind oftmals komplexe Arretierungen vorzusehen, um eine hinreichende Stabilität der unterschiedlichen Luftströmungen und Luftwirbel sicherzustellen. Diese Systeme sind hierbei zum einen recht komplex aufgebaut und zum anderen umständlich zu verstellen. Weiterhin ist die Funktionalität des Fahrzeugs, insbesondere auch seine Zugänglichkeit, zum Teil beschränkt.

Der Erfindung liegt die Aufgabe zugrunde, eine Heckspoilereinrichtung zu schaffen, die mit relativ geringem Aufwand eine Verringerung des Luftwiderstandes des Fahrzeugs ermöglicht.

Diese Aufgabe wird durch eine Heckspoilereinrichtung nach Anspruch 1 gelöst. Die Unteransprüche beschreiben bevorzugte Weiterbildungen.

Erfindungsgemäß weist die Heckspoilereinrichtung somit mindestens ein Luftleitelement auf, das zwischen einer Ruhestellung und einer Fahrstellung verstellbar ist und in der Fahrstellung an einer Außenfläche des Fahrzeugs, insbesondere einer Seitenfläche oder der Dachfläche eines kastenförmigen Aufbaus anliegt. Hierbei ist an dem vorderen Endbereich des Luftleitelementes mindestens ein Dichtmittel zur dichtenden Anlage an der Außenfläche vorgesehen. Das Dichtmittel kann insbesondere als Dichtlippe, d.h. mit gegenüber dem Seiten-Luftleitelement geringerer Breite ausgebildet sein. Das Dichtmittel kann als separates Bauteil, insbesondere Gummi oder ein Kunststoff, oder integriert an dem vorderen Endbereich vorgesehen sein. Bei einer integrierten Ausbildung kann es z. B. durch dünnwandige Ausbildung flexibel sein und sich hierdurch dichtend anlegen.

Das Dichtmittel wird in der Fahrstellung an die Außenfläche gepresst; dies kann insbesondere durch eine Verstelleinrichtung erfolgen, die das Luftleitelement gegen die Außenfläche verstellt, insbesondere schwenkt. Hierbei kann insbesondere ein Vier-Gelenk-Getriebe oder Schwenk-Getriebe zum Schwenken des Luftleitelementes von einer hinteren Ruhestellung nach vorne an die Außenfläche zur Ausbildung der Fahrstellung vorgesehen sein.

Der Erfindung liegt die Erkenntnis zugrunde, dass bei einem Aufbau mit stumpfen Ende, insbesondere bei einem kastenförmigen Aufbau eines Nutzfahrzeuges, ein hoher Luftwiderstand insbesondere durch Unregelmäßigkeiten im hinteren Bereich der Außenfläche, d. h. im hinteren Bereich der Seitenflächen oder auch einer Dachfläche auftreten kann. Diese Unregelmäßigkeiten können zunächst durch den Heckrahmen des Gestells, der im Allgemeinen auch die Hecktüren trägt, verursacht werden.

Die Unregelmäßigkeiten können weiterhin durch seitliche funktionelle Strukturen hervorgerufen werden, die für flexible oder verstellbare Seitenwände vorgesehen sind. LKW weisen z. T. ausziehbare Seitenflächen mit flexiblen Planen oder jalousie-artigen Lamellen auf. Hierfür weisen LKW-Aufbauten mit Seitenplanen bzw. flexiblen Seitenabdeckungen oftmals am hinteren Endbereich Strukturen zur Aufnahme und/oder zum Spannen der Seitenplanen auf, z. B. eine Rolle oder einen Aufnahmekasten mit Rolle und Spannfeder.

Die Unregelmäßigkeiten in der Seitenfläche führen bei der Fahrt zu Verwirbelungen. Es zeigt sich, dass überraschenderweise der Luftwiderstand der Fahrzeuge durch derartige Unregelmäßigkeiten in erheblichem Maße bestimmt wird. Es konnte erfindungsgemäß ermittelt werden, dass auf überraschende Weise Luftleitelemente, die diese Unregelmäßigkeiten abdecken und hierbei durch Dichtmittel eine dichtende Wirkung ermöglichen, zu deutlichen Verbesserungen führen.

Indem die Dichtmittel einen Zwischenraum zwischen ihnen und dem hinteren Bereich der Außenfläche des Aufbaus gegenüber dem Außenraum abdichten, erfolgt während der Fahrt kein oder nur ein geringer Luftaustausch zu dem Außenraum. Bei der Fahrt des Fahrzeugs kann aufgrund der Luftströmung ein erheblicher Unterdruck außerhalb der Luftleitflächen auftreten; der Zwischenraum zwischen Luftleitfläche und der Außenfläche des Fahrzeugs kann durch die Dichtmittel jedoch soweit getrennt werden, dass hier kein bzw. kein relevanter Luftaustritt erfolgt, wodurch die Wirbelbildung deutlich verringert werden kann.

Es zeigt sich insbesondere, dass vertikale Strömungen bzw. in vertikaler Richtung verlaufende Anteile von Luftwirbeln durch die Luftleitelemente deutlich reduziert werden. Hierbei zeigt sich, dass durch das weitgehende Eliminieren derartiger vertikaler Strömungselemente eine deutliche Verringerung des Gesamt-Luftwiderstandes erreichbar ist.

Obwohl somit der Gesamt-Querschnitt durch die Luftleitelemente erhöht wird, kann eine deutliche Reduktion des Gesamt-Luftwiderstandes erreicht werden.

Die Luftleitelemente weisen somit vorteilhafterweise eine dreifache Funktionalität auf:
- sie verlängern die Außenfläche, insbesondere Seitenfläche über das stumpfe Ende hinaus, insbesondere mit Verlauf nach hinten und innen, z. B. geradlinig oder gekrümmt, um den Abrisswirbel zu verringern;
- sie decken die Unregelmäßigkeiten ab;
- sie dichten einen Zwischenraum zwischen ihnen und dem hinteren Bereich der Außenfläche des Aufbaus gegenüber dem Außenraum ab.

Eine gute Abdichtung kann durch einen Anpressvorgang erreicht werden, bei dem der vordere Endbereich bzw. die vorderen Kanten der Luftleitelemente mit ihren Dichtmitteln in Querrichtung von außen nach innen gegen die Außenfläche gedrückt oder gepresst werden. Hierzu ist insbesondere ein Verstellsystem vorteilhaft, dass eine derartige Verstellung von der Ruhestellung in die Fahrtstellung sicher stellt, insbesondere auch als Zwangsführung mit eindeutiger Verstellkinematik. Somit kann alleine durch diese Presswirkung eine bessere Abdichtung als z. B. bei angeschraubten Luftleitelementen erreich werden.

Die Verstellung der Luftleitelemente kann insbesondere durch ein Vier-Gelenk-Getriebe mit zwei unterschiedlich langen Schwingen, die zueinander beabstandet vorgesehen sind, erfolgen, insbesondere als Zwangsführung von der Ruhestellung in die Fahrstellung. Somit ist eine für den Benutzer angenehme eindeutige Führung des Luftleitelementes zwischen seinen Stellungen ermöglicht, ohne dass z. B. zusätzlich zu einer Schwenkbewegung ein Freiheitsgrad einer Rotation auftritt. Die Verstellung ist weiterhin für den Benutzer einfach durchführbar; sie kann z. B. mit einer Hand durchgeführt werden.

Gemäß einer bevorzugten Ausbildung ist die gesamte Heckspoilereinrichtung ausschließlich an der Hecktüre des Fahrzeugs anbringbar. Insbesondere kann die gesamte Heckspoilereinrichtung in der eingefahrenen Ruhestellung nach außen nicht vorstehen bzw. innerhalb der Querschnittsfläche der Türe verbleiben und somit nicht störend vorsteht.

Indem die Heckspoilereinrichtung vollständig an der Hecktüre befestigt ist, kann diese auch beim Öffnen der Hecktüre mit vorgeschwenkt werden und stört den Öffnungsvorgang der Hecktüre nicht; somit kann auch eine Öffnung z. B. um 270° oder weitgehend 270° erreicht werden, so dass die Hecktüre im Wesentlichen ganz aufgeschwenkt und an die Seitenfläche des Fahrzeugs angelegt werden kann.

Vorteilhafterweise weist die Vier-Gelenk-Kopplung genau vier Gelenke auf, d.h. vier Gelenkachsen. Hierdurch wird eine Zwangsführung des Luftleitelementes zwischen dessen Grundstellung und Fahrstellung ermöglicht, d.h. eine eindeutige Führung ohne zusätzlichen Freiheitsgrad. Die vier Gelenke bzw. Gelenkachsen der Vier-Gelenk-Kopplung können auch jeweils durch mehrere in der gleichen Gelenkachse angeordnete Gelenke gebildet werden, z. B. durch zwei in einer Gelenkachse angeordnete Gelenke oder zwei Schwingen mit jeweils z. B. zwei oder mehr Gelenken, die jedoch alle in der gemeinsamen Gelenkachse angeordnet sind.

Die Kinematik der Vier-Gelenk-Kopplung ermöglicht einen Aufschwenkvorgang, bei dem das jeweilige Luftleitelement zunächst von der Hecktüre etwas nach hinten weggeschwenkt und dann mit seinem vorderen Ende in einer bogenförmigen Bewegung nach vorne und in der Endphase in Querrichtung von außen nach innen geschwenkt wird. Diese Kinematik der Vier-Gelenk-Kopplung weist gegenüber einem einfachen Schwenkvorgang um einen einzigen Drehpunkt deutliche Vorteile auf.

Hierbei weist die Vier-Gelenk-Kopplung insbesondere mindestens eine Hauptschwinge größerer Länge und mindestens eine Nebenschwinge kürzerer Länge auf.

Die Zwangsführung kann durch eine Federwirkung unterstützt werden. Die Federbelastung des jeweiligen Luftleitelementes kann insbesondere bistabil ausgeführt werden, und somit jeweils in die Grundstellung und die Fahrstellung wirken. Der Benutzer drückt somit von der Grundstellung ausgehend das Luftleitelement zunächst in einem ersten Schwenkbereich gegen die Federwirkung bis zu einem zwischenzeitlichen Totpunkt, von dem aus in einem zweiten Schwenkbereich ein selbständiger oder zumindest federunterstützter Aufschwenkvorgang in die Fahrstellung erfolgt, und umgekehrt zurück von der Fahrstellung in die Grundstellung. Hierdurch können Fehler in der Verstellung verhindert und die Bedienung erleichtert werden.

So kann eine Heckspoilereinrichtung mit ein oder zwei Seitenspoilereinrichtungen und ein oder zwei Dachspoilereinrichtungen sukzessive verstellt werden, indem z. B. zunächst die Seitenspoilereinrichtungen aufgestellt werden und nachfolgend die Dachspoilereinrichtungen verstellt werden, z. B. über ein Betätigungsmittel wie eine Betätigungsstange.

Die Arretierung der Seitenleitflächen kann, z. B. über umlegbare Bügel erfolgen, z. B. an den Nebenschwingen, insbesondere sowohl in der Fahrstellung als auch der Grundstellung.

In der eingeklappten Grundstellung kann z.B. das Seiten-Luftleitelement auf das heruntergeklappte Dach-Luftleitelement gelegt werden, so dass eine flache und platzsparende Aufnahme an der Hecktüre ermöglicht ist.

Die gesamte Heckspoilereinrichtung ist lediglich an der mindestens eine Hecktüre montierbar, d. h. ohne zusätzliche Anbindungen an einem Fahrzeugrahmen oder an einer Fahrzeugstruktur. Vorteilhafterweise kann die gesamte Heckspoilereinrichtung nur an einer Außenfläche der Hecktüre montiert werden. Bei einem Fahrzeug mit zwei nach außen aufschwenkbaren Hecktüren kann somit eine Heckspoilereinrichtung mit linker und rechter Seiten- und Dachspoilereinrichtung an den beiden Hecktüren montiert werden, z. B. nur an deren Außenflächen, d.h. ohne z. B. eine Oberkante der Hecktüren zu benötigen, wie es bei Kühlaufliegern z. B. nicht möglich ist.

Somit ist eine typ-unabhängige Anordnung vorgesehen. Vorzugsweise sind in der Grundstellung sowohl das Seiten-Luftleitelement als auch das Dach-Luftleitelement aus dem Türscharnierbereich hinaus geschwenkt, so dass ein maximaler Öffnungswinkel der Hecktür gegeben ist und ein Aufschwenken der mindestens einen Hecktüre um etwa 270° nach vorne nicht behindert wird. Die Hecktüre kann somit von ihrer geschlossenen Stellung vollständig nach vorne um etwa 270° vorgeschwenkt werden, wobei die eingeklappte Heckspoilereinrichtung flach an der Hecktüre oder beiden Hecktüren anliegt und somit zwischen der Hecktüre und der Seitenwand aufgenommen werden kann. Dieser Aufschwenkvorgang wird somit dadurch unterstützt, dass erfindungsgemäß keine aufwändigen komplexen Anbindungen im Scharnierbereich erforderlich sind, die bei einem derartigen Aufschwenkvorgang der Hecktüre störend wirken und große Öffnungswinkel behindern.

Die Anbringung an der Hecktüre kann lediglich von außen bzw. von hinten erfolgen, ohne z. B. in Oberkanten der Hecktüre weitere Elemente anbringen zu müssen.

Durch die Anbindung an lediglich der Hecktüre wird auch eine nachträgliche Montierbarkeit ermöglicht; die Heckspoilereinrichtung kann z. B. auch an Kühlaufliegern und anderen Nutzfahrzeugen angebracht werden. In der Grundstellung wie auch in der Fahrstellung ist das Durchfahren von Waschstraßen möglich ohne Beschädigung der Heckspoilereinrichtung.

Im eingeklappten Grundzustand liegen die Schwingen vorteilhafterweise direkt auf der Hecktüre und das jeweilige Luftleitelement zumindest bereichsweise auf den Schwingen. Vorzugsweise liegt das Seiten- Luftleitelement auf dem Dach-Luftleitelement.

Die Erfindung wird im Folgenden anhand der beiliegenden Zeichnungen an einigen Ausführungsformen näher erläutert. Es zeigen:
- Fig. 1: einen Heckbereich eines Fahrzeugs mit einer Heckspoilereinrichtung gemäß einer Ausführungsform der Erfindung in Grundstellung;
- Fig. 2: einen ersten Zwischenschritt zur Aufstellung der linken Seitenleitfläche;
- Fig. 3: einen auf Fig. 2 folgenden zweiten Zwischenschritt der Aufstellbewegung der linken Seitenleitfläche;
- Fig. 4: den Heckbereich des Fahrzeugs bei vollständig aufgestellten Seitenleitflächen und aufgestellter Dachleitfläche;
- Fig. 5: den Heckbereich des Fahrzeugs in Fahrstellung;
- Fig. 6: die Grundstellung der rechten Seitenleitfläche in Draufsicht;
- Fig. 7: die erste Zwischenstellung der rechten Seitenleitfläche entsprechend Fig. 2 in Draufsicht;
- Fig. 8: die Fahrstellung der rechten Seitenleitfläche in Draufsicht;
- Fig. 9: den rechten Heckbereich des Fahrzeugs in Draufsicht, in Grundstellung bei vorgeklappter Hecktüre;
- Fig. 10: eine vergrößerte Darstellung des Bereichs des Luftleitelementes.

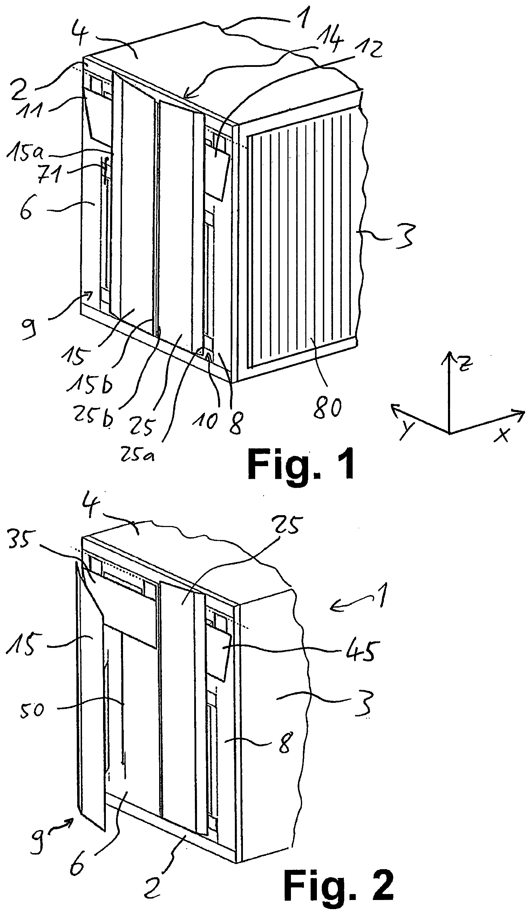

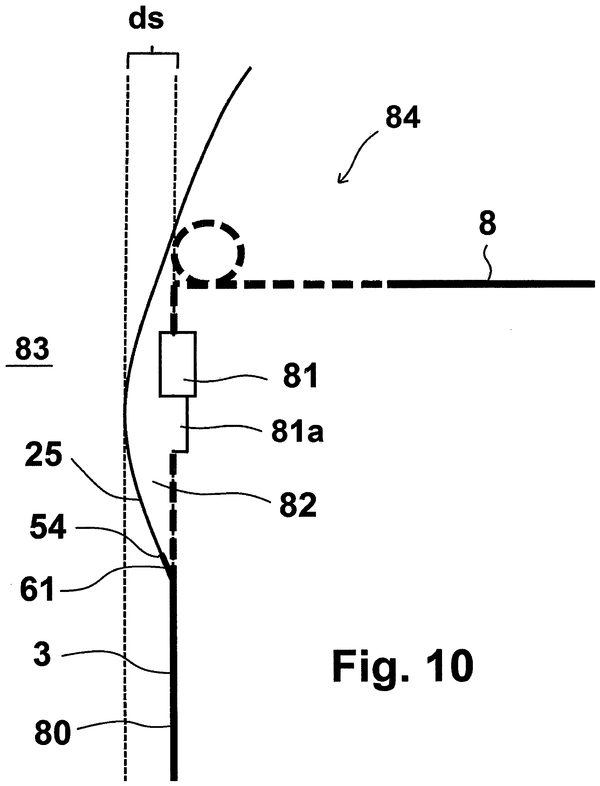

Die Figuren 1 bis 9 zeigen hierbei zunächst allgemein ein Fahrzeug 1, insbesondere Nutzfahrzeug 1 bzw. LKW mit der Verstellkinematik und verschiedenen Verstellungen. In Fig. 10 ist dann detaillierter die Abdeckung und Abdichtung gemäß einer bevorzugten Ausbildung gezeigt.

Fig. 1 zeigt einen Heckbereich eines Fahrzeugs 1, insbesondere eines Nutzfahrzeugs 1 bzw. LKWs mit einer Fahrzeugstruktur 2, die hier insbesondere ein Fahrzeugrahmen bzw. hinteres Fahrzeugportal darstellt, Seitenwänden 3, einem Dach 4 und einer (in Fahrtrichtung) linken Hecktüre 6 sowie einer rechten Hecktüre 8.

An den Seitenwänden 3 - oder zumindest einer Seitenwand 3 - ist ein Verdeck als Seitenplane 80 ausgebildet, das die gesamte Seitenwand oder einen erheblichen Teil derselben bildet. Die Seitenplane 80 ist in Fig. 1 durch vertikale Striche angedeutet; statt aus einem flexiblen Material kann sie z. B. auch durch vertikale Latten bzw. jalousienartig ausgebildet sein. Die Seitenplane 80 wird beim Einfahren in einer in einem hinteren Endbereich vorgesehenen Aufnahme 81 aufgenommen.

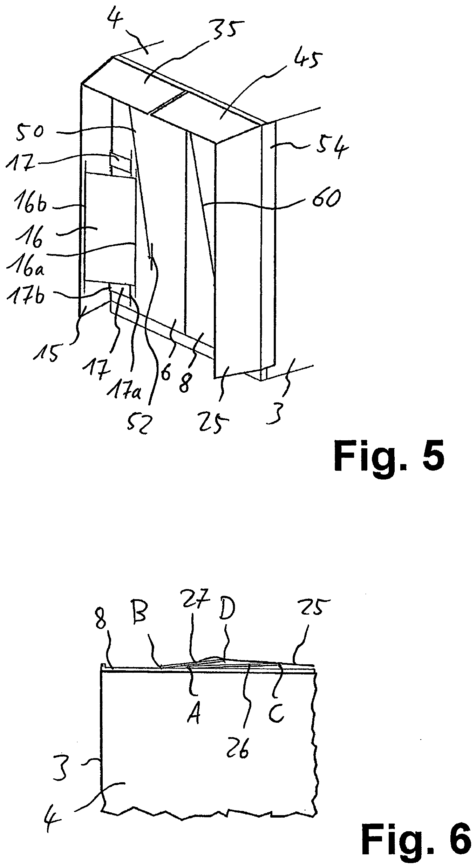

An der linken Hecktüre 6 sind eine linke Seitenspoilereinrichtung 9 und eine linke Dachspoilereinrichtung 11 befestigt, die jeweils zwischen einer eingeklappten Grundstellung und einer ausgeklappten oder ausgefahrenen Fahrstellung verstellbar sind; entsprechend sind an der rechten Hecktüre 8 eine rechte Seitenspoilereinrichtung 10 und eine rechte Dachspoilereinrichtung 12 angebracht und zwischen einer eingeklappten Grundstellung und einer ausgeklappten oder ausgefahrenen Fahrstellung verstellbar. Die beiden Seitenspoilereinrichtungen 9, 10 und die beiden Dachspoilereinrichtungen 11, 12 bilden zusammen eine Heckspoilereinrichtung 14, die somit zwischen einer in Fig. 1 gezeigten Grundstellung und einer in Fig. 5 und detaillierter in Fig. 10 gezeigten Fahrstellung zur Konturverlängerung verstellbar ist.

Die linke Seitenspoilereinrichtung 9 weist ein linkes Seiten-Luftleitelement 15, eine Hauptschwinge 16 und mindestens eine Nebenschwinge 17 auf, die jeweils zwischen der linken Hecktüre 6 und dem Seiten-Luftleitelement 15 angelenkt sind. Hierdurch wird eine Vier-Gelenk-Kopplung 18 ausgebildet.

Die rechte Seitenspoilereinrichtung 10 ist entsprechend der linken Seitenspoilereinrichtung 9 ausgebildet, d. h. in den Figuren entsprechend symmetrisch bzw. gespiegelt hierzu, mit einem rechten Seiten-Luftleitelement 25, einer rechten Hauptschwinge 26 und zwei übereinander angeordneten Nebenschwingen 27. Somit wird eine Vier-Gelenk-Kopplungen 28 ausgebildet.

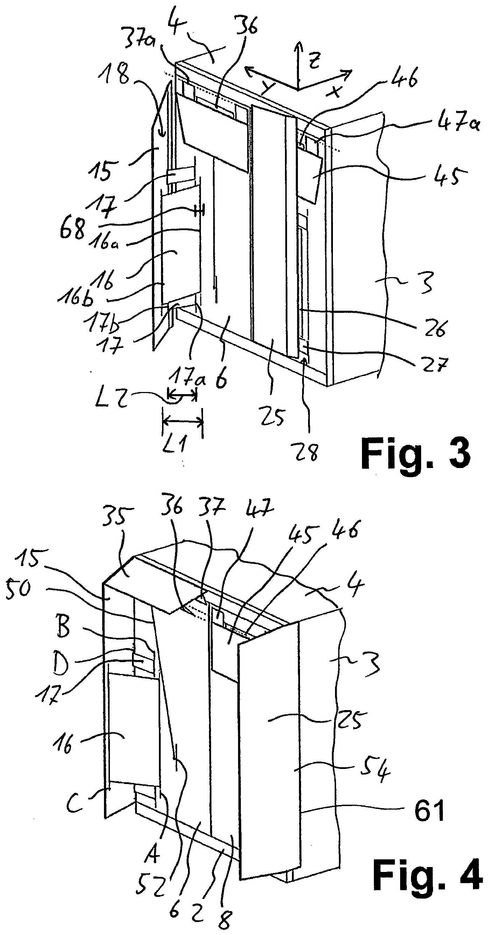

Die Seitenspoilereinrichtungen 9 und 10 sind durch die Vier-Gelenk- Kopplungen 18, 28 zwischen der Ruhestellung und Fahrstellung verstellbar. Die Fahrstellung ist in Fig. 4, 5, 8 und 10 für die rechte Seitenspoilereinrichtung 10 mit dem rechten Seiten-Luftleitelement 25 gezeigt.

Die Seiten-Luftleitelemente 15 und 25 sind vorzugsweise mit leichter Krümmung nach innen ausgebildet, wie insbesondere aus Fig. 10 ersichtlich ist. Sie weisen jeweils einen vorderen Endbereich 54 auf, an dem ein Dichtmittel (eine Dichtlippe) 61 angebracht oder ausgebildet ist, das in der Fahrstellung gegen die Seitenwand 3 oder 4, d.h. z. B. gegen ein Fahrzeugstrukturteil oder die Plane 80 gedrückt wird. Durch die bogenförmige Krümmung erstrecken sich die Seiten-Luftleitelemente 15 und 25 seitlich um einen Abstand ds nach außen, wie aus Fig. 10 ersichtlich ist; somit wird der Gesamt-Querschnitt des Fahrzeugs 1 etwas vergrößert.

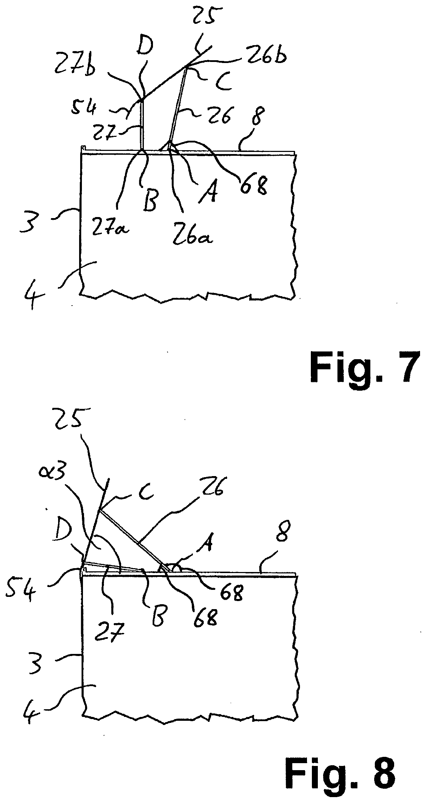

Die Fig. 6 und 7 zeigen den Aufschwenkvorgang in Draufsicht; die Vier-Gelenk-Kopplungen 18 und 28 ermöglichen hierbei eine geeignete Schwenkbewegung, bei der die Leitflächenverlängerungen 54 in der Endphase nicht an die Hecktüren 6, 8 oder die Fahrzeugstruktur 2 stoßen und in der Fahrstellung die Presswirkung oder Kraftausübung zum Verpressen des Dichtmittels 61 erreicht wird.

Die Endbereiche 54 werden somit seitlich von außen nach innen an die Seitenwände 3 gedrückt, wobei durch das Dichtmittel 61 eine Abdichtung eines Zwischenraums 82, der zwischen der Seitenwand 3 und dem Luftleitelement 25 ausgebildet ist, erreicht wird. Somit sind in dem Zwischenraum 82 vorhandene Unregelmäßigkeiten wie die Aufnahme 81 für die Plane oder auch ein Spalt 81a neben oder der Aufnahme aufgenommen und können nicht zur Wirbelbildung beitragen.

Somit wird gemäß Fig. 10 ein vom Fahrtwind abgeschirmter Bereich 84 gebildet, der hier zur Veranschaulichung gestrichelt ist; der Bereich 84 erstreckt sich von dem Zwischenraum 82 vorteilhafterweise bis in den Heckbereich des Fahrzeuges 1.

Sämtliche Leitelemente 15, 25, 35, 45 können kostengünstig aus Kunststoff ausgebildet sein. Die Schwingen 16, 17, 26, 27, 36, 37, 46, 47 können aus einem beliebigen Material, z. B. zur Ausbildung einer hohen Stabilität aus Metall ausgebildet sein.

Die Dichtmittel 61 sind vorteilhafterweise aus einem flexiblen Material, insbesondere auch mit höherer Haftwirkung gefertigt als die Luftleitelemente. Das Material kann ein Gummi-Material oder ein Kunststoff-Material sein, z. B. ein PUR-Schaum. Weiterhin kann es auch als faserverstärktes Gummi- oder Kunststoffmaterial ausgebildet sein.

Die Dichtmittel bzw. Dichtlippen können als separate Teile an den vorderen Enden 54 der Seiten-Luftleitelemente 15 angebracht sein. Weiterhin ist auch eine integrierte oder einteilige Ausbildung mit den Seiten-Luftleitelementen 15 möglich, z. B. eine einteilige dünnwandige Ausbildung.

Nachfolgend werden die Vier-Gelenk-Kopplungen 18 und 28 und ihre Verstellungen detaillierter beschrieben.

Die Hauptschwinge 16 ist mit einem Ende in einem vorderen Gelenk 16a in einer Gelenkachse A an der linken Hecktüre 6, und mit ihrem anderen Ende über ein hinteres Gelenk 16b in einer Gelenkachse C an dem linken Seiten-Luftleitelement 15 angelenkt. Statt einer Hauptschwinge 16 können auch zwei Hauptschwingen 16 vertikal übereinander, d. h. mit fluchtenden vorderen Gelenken 16a und fluchtenden hinteren Gelenken 16b vorgesehen sein; relevant ist, dass jeweils eine vordere Gelenkachse A und eine hintere Gelenkachse C ausgebildet wird.

Die mindestens eine Nebenschwinge 17 ist in einem vorderen Gelenk 17a in einer vorderen Gelenkachse B an der linken Hecktüre 6 und einem hinteren Gelenk 17b in einer hinteren Gelenkachse D an dem Seiten-Luftleitelement 15 angelenkt. Bei der gezeigten Ausführungsform sind zwei Nebenschwingen 17 vertikal übereinander mit fluchtenden Gelenken 17a in der gemeinsamen vorderen Gelenkachse B und fluchtenden Gelenken 17b in einer gemeinsamen hinteren Gelenkachse D vorgesehen; grundsätzlich kann auch nur eine einzige Nebenschwinge vorgesehen sein. Die Längserstreckung der Nebenschwinge 17 wird somit durch den Abstand ihrer Gelenke 17a und 17 b, d.h. der Gelenkachsen B und D bestimmt und ist als L2 eingezeichnet. Hierbei gilt L1 > L2, d. h. die Hauptschwinge 16 ist länger als die mindestens eine Nebenschwinge 17.

Entsprechend ist die rechte Seitenspoilereinrichtung 10 ausgebildet: die Hauptschwinge 26 weist eine erste Länge L1 auf und ist in einem vorderen Gelenk 26a und einem hinteren Gelenk 26b angebunden; die beiden über einander angeordneten Nebenschwingen 27 sind jeweils in einem vorderen Gelenk 27a und hinteren Gelenk 27b angelenkt, wobei die vorderen Gelenke 27a und entsprechend die hinteren Gelenke 27b der beiden Nebenschwingen 27 jeweils fluchten.

Weiterhin sind die Gelenkachsen A und B in Querrichtung bzw. Y-Richtung an der linken Hecktüre 6 zueinander versetzt; entsprechend sind auch die hinteren Gelenkachsen C und D an dem Seiten-Luftleitelement 15 in Querrichtung bzw. Y-Richtung zueinander versetzt. Vorteilhafterweise sind die Gelenkachsen B und D der Nebenschwinge 17 in Y-Richtung bzw. Querrichtung weiter außen, d. h. zur linken Seitenwand 3 hin vorgesehen als die Gelenkachsen A und C der Hauptschwinge 16. Somit bilden die Schwingen 16, 17 mit ihren Gelenken 16a, 16b, 17a, 17b bzw. die Gelenkachsen A, B, C, D ein Vier-Gelenk-Getriebe bzw. die Vier-Gelenk-Kopplung 18 zwischen der linken Hecktüre 6 und dem linken Seiten-Luftleitelement 15, die somit eine Zwangsführung zwischen der in Fig. 1 gezeigten Grundstellung und der z. B. in Fig. 5 und 10 gezeigten Fahrstellung sicherstellt. Dies ist insbesondere auch aus den Draufsichten der Fig. 6 bis 9 bei der rechten Seitenspoilereinrichtung 10 ersichtlich, in denen die selben Gelenkachs-Bezeichnungen A, B, C, D verwendet sind. Zu den Gelenkausbildungen im Einzelnen:

In der Grundstellung der Fig. 1 liegt das Seiten-Luftleitelement 15 im Wesentlichen parallel zur linken Hecktüre 6, wobei die beiden Schwingen 16 und 17 ebenfalls im Wesentlichen parallel verlaufen und somit flach zwischen der Hecktüre 6 und dem Seiten-Luftleitelement 15 aufgenommen sind. Zur ungestörten Klappbewegung sind daher die beiden Nebenschwingen 17 auch in vertikaler Richtung bzw. Z-Richtung etwas zu der Hauptschwinge 16 versetzt, insbesondere wie gezeigt, indem eine Nebenschwinge 17 oberhalb und die andere Nebenschwinge 17 unterhalb der Hauptschwinge 16 vorgesehen sind, so dass sämtliche Klapp- und Schwenkbewegungen ohne gegenseitige Beeinflussung der Hauptschwinge 16 und der beiden Nebenschwingen 17 erfolgen können.

In der Grundstellung der Fig. 1 sind somit die beiden linken Schwingen 16 und 17 derartig eingeschwenkt, dass ihre hinteren Gelenke 16b und 17b zur Mitte, d. h. von der linken Seitenwand 3 hin weggeschwenkt, so dass das vordere Gelenk 16a weiter außen als das hintere Gelenk 16b und entsprechend das vordere Gelenk 16a in Querrichtung bzw. Y-Richtung weiter außen als das hintere Gelenk 17b angeordnet sind. In dieser Grundstellung liegt das linke Seiten-Luftleitelement 15 flach auf den Schwingen 16, 17 und somit im Wesentlichen parallel zur geschlossenen linken Hecktüre 6 auf.

Vorteilhafterweise ist eine bistabile Federeinrichtung 68 vorgesehen, die die Vier-Gelenk-Kopplung 18 jeweils entweder in die Grundstellung oder in die Fahrstellung drückt, z. B. mit einem Totpunkt in der Position der Fig. 2 oder 3.

Die Grundstellung kann ergänzend arretiert sein, z. B. durch die in Fig. 1 eingezeichnete Arretierung 71, die z. B. als schwenkbarer Bügel an der Hecktüre 6 montiert werden kann, z. B. mit dem Lagerbock des vorderen Gelenkes 17a, um eine flach aufliegende Nebenschwinge 17 zu arretieren.

Von Fig. 1 ausgehend wird zur Verstellung in die Fahrstellung das linke Seiten-Luftleitelement 15 nach hinten geschwenkt, wobei die Fig. 2 und 3 rein beispielhaft Zwischenstellungen (ohne besondere Funktion) zeigen: In der ersten Zwischenstellung der Fig. 2 entfernt sich somit das linke Seiten- Luftleitelement 15 von der Hecktüre 6 nach hinten, wobei aufgrund der geringeren zweiten Länge L2 der weiter außen (in Y-Richtung außen) angelenkte Nebenschwinge 17 ein vorderes Ende 15a des linken Seiten- Luftleitelementes 15 eine kleine Schwenkbewegung bzw. Schwenkbewegung mit kleinerem Radius vollführt als das hintere Ende 15b. Über die zweite Zwischenstellung der Fig. 3 gelangt das Seiten- Luftleitelement 15 somit in die vollständig aufgestellte oder ausgeklappte Fahrstellung, in der vorteilhafterweise die beiden Nebenschwingen 17 wiederum flach auf der linken Hecktüre 6 aufliegen; die Nebenschwingen 17 führen somit vorteilhafterweise eine Schwenkbewegung mit einem Schwenkwinkel α2=180°durch. Die Hauptschwinge 16 führt hingegen eine kleinere Schwenkbewegung mit einem Schwenkwinkel α1<α2, z. B. α1 zwischen 90° und 180° durch, so dass das hintere Ende 15b des linken Seiten- Luftleitelementes 15 nicht genau in Längsrichtung bzw. X-Richtung ausgerichtet ist, sondern etwas zur lateralen Mitte bzw. in Y-Richtung zur Mitte hin steht.

Die - der Übersichtlichkeit halber nur in einigen Figuren eingezeichneten Federeinrichtungen 68, z. B. Gasdruckfedern 68 - können bei z. B. der linken Seitenspoilereinrichtung 9 z. B. zwischen der Hecktüre 6 und dem Seiten-Luftleitelement 15 oder vorzugsweise unter Einbeziehung der Schwingen 16 und 17 ausgebildet sein; so können z. B. für die linke Seitenspoilereinrichtung 9 eine Federeinrichtung 68 zwischen der Hauptschwinge 16 und deren vorderen Gelenk 16a bzw. dem türseitig zu befestigen Lagerbock des vorderen Gelenks 16a vorgesehen sein, entsprechend auch für die anderen Spoilereinrichtungen 10, 11, 12.

Die Federeinrichtung 68 wirkt von Fig. 1 ausgehend zunächst gegen die Verstellbewegung und unterstützt den Benutzer in der Endphase der Verstellung, so dass lediglich die Grundstellung und Fahrstellung eingestellt werden können, nicht aber Zwischenstellungen.

Durch die Federeinrichtung 68 kann somit auch die Anpresswirkung oder Anpresskraft zum Anpressen des Dichtmittels 61 gegen die Seitenwand 3 ausgeübt werden.

Die linke Dachspoilereinrichtung 11 ist entsprechend wieder über eine Vier-Gelenk-Kopplung 38 an der linken Hecktüre 6 angelenkt, mit einer Hauptschwinge 36 einer dritten Länge L3 und mindestens einer Nebenschwinge 37 einer vierten Länge L4, wobei L3 > L4. Bei der gezeigten Ausführungsform erfolgt die Vier-Gelenk-Kopplung 38 wiederum mit einer Hauptschwinge 36 und zwei fluchtend angelenkten, parallelen Nebenschwingen 37, so dass sich wieder eine Vier-Gelenk-Kopplung 38 entsprechend den Vier-Gelenk-Kopplungen 18 und 28 der Seitenspoilereinrichtungen 9 und 10 ausbildet, so dass eine Zwangsführung des linken Dach-Luftleitelementes 35 von der Grundstellung der Fig. 1 in die Fahrstellung der Fig. 4, 5 ergibt. Die Anordnung der vorderen Gelenke 36a und 37a der Hauptschwinge 36 und der Nebenschwinge 37 und die Längen L3 und L4 können derartig gewählt werden, dass ein gewünschter Aufstell-Winkel des linken Dach- Luftleitelementes 35 erreicht wird.

Entsprechend ist die rechte Dachspoilereinrichtung 12 mit einem rechten Dach-Luftleitelement 46, einer rechten Dach-Hauptschwinge 46 und zwei rechten Dach-Nebenschwingen 47 ausgebildet, mit gleicher geometrischer Ausbildung entsprechend der linken Dachspoilereinrichtung 11, d. h. mit gleichen L3 und L4, wobei hier vorteilhafterweise die vorderen Gelenke 36a und 46a, sowie 37a und 47a, und entsprechend auch in der Fahrstellung die hinteren Gelenke 36b und 46b, sowie entsprechend 37b und 47b, fluchten.

Die Arretierung der linken Seitenspoilereinrichtung 9 in der Fahrstellung erfolgt entweder über einen umlegbaren Riegel oder eine andere Arretierung 69, wie z. B. die Arretierung 71 der Nebenschwinge 17, da diese in der Fahrstellung flach an der Hecktüre 6 anliegt und somit die Arretierung 69 als Bügel an der Hecktüre 6 angebracht werden kann, z. B. als weiteres Bauteil oder zusammen mit dem vorderen Gelenk 17a der Nebenschwinge 17; entsprechend ist dies auch bei der rechten Seitenspoilereinrichtung 10 möglich. Auch die Arretierung 71 für die Fahrstellung kann zusammen mit dem vorderen Gelenk 17a bzw. deren Lagerbock an der Hecktüre 6 montiert werden, sodass eine einfache Montage möglich ist.

Weiterhin ist eine Arretierung der linken Seitenspoilereinrichtung 9 auch über das linke Dach-Luftleitelement 35 in dessen ausgefahrener Stellung, so dass dieses z. B. mit seiner rechten Kante 35c an der Innenseite oder der oberen Kante des linken Seiten-Luftleitelementes 15 anliegt, und somit dessen Einschwenkbewegung blockiert.

Die Arretierung der linken Dachspoilereinrichtung 11 wiederum erfolgt vorteilhafterweise durch zusätzliche mechanische Arretiermittel, z. B. eine Betätigungsstange 50, die zunächst zum Hochklappen des linken Dach- Luftleitelementes 35 verwendet wird und nach dem Hochklappen an der Hecktüre 6 in einer Verriegelungseinrichtung 52 arretiert wird, vorteilhafterweise unter einem geeigneten Winkel gegenüber der linken Hecktüre 6, um eine stabile Dreiecks-Ausbildung zu gewährleisten.

Somit wird an jeder Hecktüre 6, 8 zunächst die jeweilige Seitenspoilereinrichtung 9 bzw. 10 von der Grundstellung in die Fahrstellung verstellt, was von dem Benutzer, z. B. dem Fahrer, manuell durch Rückwärts-Schwenken des linken Seiten-Luftleitelementes 15 bzw. des rechten Seiten-Luftleitelementes 25 erfolgen kann, da dieses durch die jeweilige Vier-Gelenk-Kopplung 18 bzw. 28 zwangsgeführt ist und somit ohne Aufwand in die jeweilige Fahrstellung verschwenkt werden kann, vorteilhafterweise mit Unterstützung der Federeinrichtung in der Endphase der Schwenkbewegung. Dann kann die Arretierung durch Umlegen der Arretierung 69 erfolgen.

Dann ergreift der Benutzer die Betätigungsstange 50 und klappt das jeweilige Dach- Luftleitelement 35 bzw. 45 nach oben in dessen aufgeklappte Fahrstellung, in der es das jeweilige Seiten-Luftleitelement 15 bzw. 25 in dessen Fahrstellung arretiert, und verriegelt die Druckstange 50 bzw. 60 in einer Arretierung 52 bzw. 62. Auch die Dachspoilereinrichtungen 11 und 12 können durch Federeinrichtungen federvorgespannt sein; hier ist aber auch eine Ausbildung ohne Federwirkung möglich, um die anfängliche Verstellung gegen die Gewichtskraft nicht zusätzlich zu erschweren, wobei die Fahrstellung durch die Arretierung ohnehin festgelegt ist.

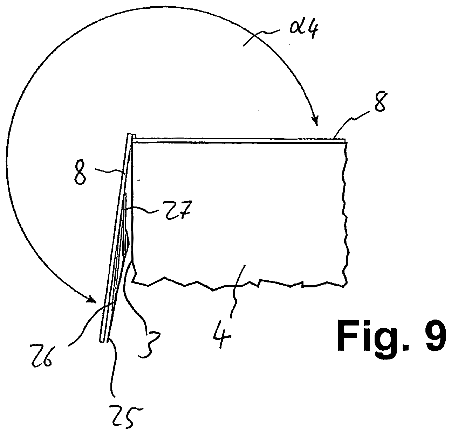

Von der Grundstellung der Fig. 1 ausgehend können beide Hecktüren 6 und 8 vollständig auf- und vorgeschwenkt werden, wie aus der Draufsicht der Fig. 9 ersichtlich ist. Somit ist eine übliche Öffnung mit einem Öffnungswinkel α4 von 270° bzw. fast 270° möglich. Die gesamte Heckspoilereinrichtung 14 bzw. gemäß Fig. 9 die rechte Seitenspoilereinrichtung 10 und die rechte Dachspoilereinrichtung 12 sind hierbei eingeklappt und liegen daher flach an, so dass sie zwischen der aufklappenden Hecktüre 8 und der Seitenwand 3 aufgenommen werden können, ohne den Aufschwenkvorgang bzw. Öffnungswinkel wesentlich zu beeinträchtigen.

## Patentansprüche

1. Heckspoilereinrichtung (14) für ein Fahrzeug (1), wobei die Heckspoilereinrichtung (14) mindestens aufweist:
ein Luftleitelement (15, 25, 35, 45) zur Konturverlängerung einer Außenfläche (3, 4) des Fahrzeugs (1) in einer Fahrstellung, eine Verstelleinrichtung (18, 28, 38, 48) zum Verstellen des Luftleitelementes (15, 25, 35, 45) zwischen der Fahrstellung und einer Ruhestellung,
wobei ein vorderes Ende (54) des Luftleitelementes (15, 25, 35, 45) zur Anlage an der Außenfläche (3, 4) des Fahrzeuges (1) in der Fahrstellung vorgesehen ist,
**dadurch gekennzeichnet, dass**
an dem vorderen Ende (54) des Luftleitelementes (15, 25, 35, 45) mindestens ein Dichtmittel (61) vorgesehen ist zur dichtenden Anlage an der Außenfläche (3, 4) des Fahrzeugs, und
die Verstelleinrichtung (18, 28, 38, 48) zum Anpressen des Dichtmittels (61) an die Außenfläche (3, 4) in der Fahrstellung vorgesehen ist.

2. Heckspoilereinrichtung (14) nach Anspruch 1, **dadurch gekennzeichnet, dass** das vordere Ende (54) des Luftleitelementes (15, 25, 35, 45) zu der Außenfläche (3, 4) hin gebogen ist.

3. Heckspoilereinrichtung (14) nach Anspruch 1 oder 2, **dadurch gekennzeichnet, dass** das Dichtmittel (61) als separates Bauteil an dem Luftleitelement (15, 25, 35, 45) angebracht ist.

4. Heckspoilereinrichtung (14) nach Anspruch 3, **dadurch gekennzeichnet, dass** das Dichtmittel (61) aus einem flexibleren Material als das Luftleitelement (15, 25, 35, 45) ausgebildet ist, vorzugsweise einem Gummi-Material oder einem Kunststoff, z. B. einem faserverstärkten Gummi- oder Kunststoffmaterial.

5. Heckspoilereinrichtung (14) nach Anspruch 1 oder 2, **dadurch gekennzeichnet, dass** das Dichtmittel (61) einteilig mit dem Luftleitelement (15, 25, 35, 45) ausgebildet ist, insbesondere als Dichtlippe mit geringerer Breite als mittlere Bereiche des Luftleitelementes (15, 25, 35, 45).

6. Heckspoilereinrichtung (14) nach einem der vorherigen Ansprüche, **dadurch gekennzeichnet, dass** sie vollständig an einer Hecktür (6) oder beiden Hecktüren (6, 8) des Fahrzeugs (1) anbringbar ist und in der Grundstellung bei Öffnen der mindestens einen Hecktüre (6, 8) nach vorne zur Anlage an der Außenfläche (3, 4des Fahrzeugs (1), zwischen der Hecktüre (6, 8) und der Außenfläche (3, 4) aufnehmbar ist.

7. Heckspoilereinrichtung (14) nach einem der vorherigen Ansprüche, **dadurch gekennzeichnet, dass** die Verstelleinrichtung (18, 28, 38, 48) als Zwangsführung mit lediglich einem Freiheitsgrad zum Verstellen des Luftleitelementes (15, 25, 35, 45) zwischen der Ruhestellung und der Fahrstellung ausgebildet ist.

8. Heckspoilereinrichtung (14) nach Anspruch 7, **dadurch gekennzeichnet, dass** die Verstelleinrichtung (18, 28, 38, 48) als Viergelenk-Getriebe mit vier Gelenken oder Gelenkachsen (A, B, C, D), mindestens einer Hauptschwinge (16, 26, 36, 46) mit einer größeren Länge (L1, L3) und mindestens einer Nebenschiene (17, 27, 37, 47) mit einer kleineren Länge (L2, L4) ausgebildet ist,
wobei die Hauptschwinge (16, 26, 36, 46) und die Nebenschwinge (17, 27, 37, 47) jeweils ein vorderes Gelenk (16a, 17a, 26a, 27a, 36a, 37a, 46a, 47a) zur Anbindung an einer Hecktüre (6, 8) des Fahrzeugs (1) aufweisen.

9. Heckspoilereinrichtung (14) nach Anspruch 8, **dadurch gekennzeichnet, dass** das vordere Gelenk (17a, 27a, 37a, 47a) der Nebenschwinge (17, 27, 37, 47) weiter außen zu der Außenfläche (3, 4) des Fahrzeugs (1) hin an der Hecktüre (6, 8) anbindbar ist als das vordere Gelenk (16a, 26a, 36a, 46a) der Hauptschwinge (16, 26, 36, 46).

10. Heckspoilereinrichtung (14) nach Anspruch 8 oder 9, **dadurch gekennzeichnet, dass** das hintere Gelenk (17b, 27b, 37b, 47b) der Nebenschwinge (17, 27, 37, 47) weiter außen an dem Luftleitelement (15, 25, 35, 45) angebunden ist als das hintere Gelenk (16b, 26b, 36b, 46b) der Hauptschwinge (16, 26, 36, 46).

11. Heckspoilereinrichtung (14) nach einem der Ansprüche 8 bis 10, **dadurch gekennzeichnet, dass** ein erster Schwenkwinkel (α1) der Hauptschwinge (16, 26, 36, 46) kleiner als ein zweiter Schwenkwinkel (α2) der Nebenschwinge (17, 27, 37, 47) ist.

12. Heckspoilereinrichtung (14) nach einem der Ansprüche 8 bis 10, **dadurch gekennzeichnet, dass** das Luftleitelement (15, 25, 35, 45) in der Grundstellung flach auf der Nebenschwinge (17, 27, 37, 47) und der Hauptschwinge (16, 26, 36, 46) und im Wesentlichen parallel zu der Hecktüre (6, 8) aufliegt und in der Fahrstellung unter einem Fahrstellungs-Winkel (α3) zwischen 0 und 90° von der Hecktüre (6, 8) absteht.

13. Heckspoilereinrichtung (14) nach einem der vorherigen Ansprüche, **dadurch gekennzeichnet, dass** das Luftleitelement (15, 25, 35, 45) in der Fahrstellung druckdicht oder eine Druckdifferenz abdichtend an die Außenfläche (3, 4) des Fahrzeugs (1) anpressbar ist, zur Abschirmung eines Zwischenbereichs (82) zwischen dem Luftleitelement (15, 25, 35, 45) und der Außenfläche (3, 4) gegenüber einem vom Fahrtwind durchströmbaren Außenraum (83).

14. Heckspoilereinrichtung (14) nach einem der vorherigen Ansprüche, **dadurch gekennzeichnet, dass** das Luftleitelement (15, 25) in der Fahrstellung von seinem vorderen Endbereich (54) aus nach hinten zunächst bogenförmig seitlich nach außen verläuft und nachfolgend seitlich nach innen verläuft bis hinter einen Heckbereich oder eine Hecktüre (8) des Fahrzeugs (1).

15. Fahrzeug (1) mit einer Heckspoilereinrichtung (14) nach einem der vorherigen Ansprüche, **dadurch gekennzeichnet, dass** in der Fahrstellung durch das Dichtmittel (61) ein Zwischenraum (82) zwischen dem Luftleitelement (15, 25) und der Außenfläche (3, 4) gegenüber einem vom Fahrtwind durchströmbaren Außenraum (83) des Fahrzeugs (1) abgedichtet ist.

16. Fahrzeug (1) nach Anspruch 15, **dadurch gekennzeichnet, dass** die Verstelleinrichtung (18, 28, 38, 48) in der Fahrstellung das an dem vorderen Endbereich (54) des Luftleitelementes (15, 25) vorgesehene Dichtmittel (61) gegen die Außenfläche (3, 4) des Fahrzeugs, insbesondere eine Seitenwand (3), z. B. gegen eine Plane (80), presst.

17. Fahrzeug (1) nach Anspruch 15 oder 16, **dadurch gekennzeichnet, dass** die Verstelleinrichtung (18, 28, 38, 48) das Luftleitelement (15, 25) bei der Verstellung in die Fahrstellung mit dessen vorderem Endbereich (54) von außen gegen die Außenfläche (3, 4) schwenkt.

18. Fahrzeug nach einem der Ansprüche 15 bis 17, **dadurch gekennzeichnet, dass** an der Seitenfläche (3) in dem von dem Luftleitelement (15, 25) abgetrennten Zwischenraum (82) Unregelmäßigkeiten oder Strukturen (81), z. B. eine Aufnahme (81) für eine Plane oder eine Nut, ausgebildet sind.

## Claims

1. Rear spoiler device (14) for a vehicle (1), wherein the rear spoiler device (14) at least comprises: an air-guiding element (15, 25, 35, 45) for lengthening the contour of an outer surface (3, 4) of the vehicle (1) in a travel position, a displacement device (18, 28, 38, 48) for displacing the air-guiding element (15, 25, 35, 45) between the travel position and a home position, wherein a front end (54) of the air-guiding element (15, 25, 35, 45) is provided for bearing against the outer surface (3, 4) of the vehicle (1) in the travel position, **characterized in that** at least one sealing means (61) for sealingly bearing against the outer surface (3, 4) of the vehicle is provided at the front end (54) of the air-guiding element (15, 25, 35, 45), and the displacement device (18, 28, 38, 48) is provided for pressing the sealing means (61) against the outer surface (3, 4) in the travel position.

2. Rear spoiler device (14) according to Claim 1, **characterized in that** the front end (54) of the air-guiding element (15, 25, 35, 45) is curved toward the outer surface (3, 4).

3. Rear spoiler device (14) according to Claim 1 or 2, **characterized in that** the sealing means (61) is attached as a separate component on the air-guiding element (15, 25, 35, 45).

4. Rear spoiler device (14) according to Claim 3, **characterized in that** the sealing means (61) is made from a more flexible material than the air-guiding element (15, 25, 35, 45), preferably from a rubber material or a plastics material, e.g., a fiber-reinforced rubber or plastics material.

5. Rear spoiler device (14) according to Claim 1 or 2, **characterized in that** the sealing means (61) is formed as a single piece with the air-guiding element (15, 25, 35, 45), in particular as a sealing lip having a smaller width than the central region of the air-guiding element (15, 25, 35, 45).

6. Rear spoiler device (14) according to one of the preceding claims, **characterized in that** it can be attached, in entirety, to a rear door (6) or both rear doors (6, 8) of the vehicle (1) and can be accommodated between the rear doors (6, 8) and the outer surface (3, 4) in the home position when the at least one rear door (6, 8) is opened toward the front in order to bear against the outer surface (3, 4) of the vehicle (1).

7. Rear spoiler device (14) according to one of the preceding claims, **characterized in that** the displacement device (18, 28, 38, 48) is designed as forced guidance having only one degree of freedom for displacing the air-guiding element (15, 25, 35, 45) between the home position and the travel position.

8. Rear spoiler device (14) according to Claim 7, **characterized in that** the displacement device (18, 28, 38, 48) is designed as a four-link mechanism having four joints or joint axes (A, B, C, D), at least one main rocker arm (16, 26, 36, 46) having a longer length (L1, L3) and at least one secondary rocker arm (17, 27, 37, 47) having a shorter length (L2, L4), wherein the main rocker arm (16, 26, 36, 46) and the secondary rocker arm (17, 27, 37, 47) each have a front joint (16a, 17a, 26a, 27a, 36a, 37a, 46a, 47a) for connection to a rear door (6, 8) of the vehicle (1).

9. Rear spoiler device (14) according to Claim 8, **characterized in that** the front joint (17a, 27a, 37a, 47a) of the secondary rocker arm (17, 27, 37, 47) can be connected to the rear door (6, 8) further outward toward the outer surface (3, 4) of the vehicle (1) than the front joint (16a, 26a, 36a, 46a) of the main rocker arm (16, 26, 36, 46).

10. Rear spoiler device (14) according to Claim 8 or 9, **characterized in that** the rear joint (17b, 27b, 37b, 47b) of the secondary rocker arm (17, 27, 37, 47) is connected to the air-guiding element (15, 25, 35, 45) further outward than the rear joint (16b, 26b, 36b, 46b) of the main rocker arm (16, 26, 36, 46).

11. Rear spoiler device (14) according to one of Claims 8 to 10, **characterized in that** a first swivel angle (α1) of the main rocker arm (16, 26, 36, 46) is smaller than a second swivel angle (α2) of the secondary rocker arm (17, 27, 37, 47).

12. Rear spoiler device (14) according to one of Claims 8 to 10, **characterized in that** the air-guiding element (15, 25, 35, 45), in the home position, rests in a flat position on the secondary rocker arm (17, 27, 37, 47) and the main rocker arm (16, 26, 36, 46) and substantially parallel to the rear door (6, 8) and, in the travel position, protrudes from the rear door (6, 8) at a travel-position angle (α3) between 0 and 90°.

13. Rear spoiler device (14) according to one of the preceding claims, **characterized in that** the air-guiding element (15, 25, 35, 45), in the travel position, can be pressed against the outer surface (3, 4) of the vehicle (1) in a pressure-tight manner or so as to seal a pressure difference, for shielding an intermediate region (82) between the air-guiding element (15, 25, 35, 45) and the outer surface (3, 4) with respect to an outer space (83) through which the wind of the vehicle's own speed can flow.

14. Rear spoiler device (14) according to one of the preceding claims, **characterized in that** the air-guiding element (15, 25), in the travel position, extends from its front end region (54) toward the rear initially laterally outward in an arch shape and subsequently extends laterally inward to behind a rear region or a rear door (8) of the vehicle (1).

15. Vehicle (1) comprising a rear spoiler device (14) according to one of the preceding claims, **characterized in that**, in the travel position, the sealing means (61) seals an intermediate space (82) between the air-guiding element (15, 25) and the outer surface (3, 4) with respect to an outer space (83) of the vehicle (1), through which the wind of the vehicle's own speed can flow.

16. Vehicle (1) according to Claim 15, **characterized in that** the displacement device (18, 28, 38, 48), in the travel position, presses the sealing means (61), which is provided at the front end region (54) of the air-guiding element (15, 25), against the outer surface (3, 4) of the vehicle, in particular a side wall (3), e.g., against a panel (80).

17. Vehicle (1) according to Claim 15 or 16, **characterized in that**, during the displacement into the travel position, the displacement device (18, 28, 38, 48) swivels the air-guiding element (15, 25) with its front region (54) from the outside against the outer surface (3, 4).

18. Vehicle according to one of Claims 15 to 17, **characterized in that** irregularities or structures (81), e.g., a receptacle (81) for a panel or a groove, are formed on the lateral surface (3) in the intermediate space (82) separated from the air-guiding element (15, 25).

## Revendications

1. Système de becquet arrière (14) pour un véhicule (1), dans lequel le système de becquet arrière (14) présente au moins:
un élément déflecteur d'air (15, 25, 35, 45) pour le prolongement du contour d'une face extérieure (3, 4) du véhicule (1) dans une position de roulage, un dispositif de réglage (18, 28, 38, 48) pour le déplacement de l'élément déflecteur d'air (15, 25, 35, 45) entre une position de roulage et une position de repos,
dans lequel une extrémité avant (54) de l'élément déflecteur d'air (15, 25, 35, 45) est prévue pour s'appliquer sur la face extérieure (3, 4) du véhicule (1) dans la position de roulage,
**caractérisé en ce qu'**il est prévu à l'extrémité avant (54) de l'élément déflecteur d'air (15, 25, 35, 45) au moins un moyen d'étanchéité (61) pour l'appui étanche sur la face extérieure (3, 4) du véhicule, et **en ce que** le dispositif de réglage (18, 28, 38, 48) est prévu pour le pressage du moyen d'étanchéité (61) sur la face extérieure (3, 4) dans la position de roulage.

2. Système de becquet arrière (14) selon la revendication 1, **caractérisé en ce que** l'extrémité avant (54) de l'élément déflecteur d'air (15, 25, 35, 45) est incurvée en direction de la face extérieure (3, 4).

3. Système de becquet arrière (14) selon la revendication 1 ou 2, **caractérisé en ce que** le moyen d'étanchéité (61) est monté sous la forme d'un composant séparé sur l'élément déflecteur d'air (15, 25, 35, 45).

4. Système de becquet arrière (14) selon la revendication 3, **caractérisé en ce que** le moyen d'étanchéité (61) est formé en un matériau plus flexible que l'élément déflecteur d'air (15, 25, 35, 45), de préférence en un matériau à base de caoutchouc ou en une matière plastique, par exemple en un matériau à base de caoutchouc ou de matière plastique renforcé par des fibres.

5. Système de becquet arrière (14) selon la revendication 1 ou 2, **caractérisé en ce que** le moyen d'étanchéité (61) est réalisé d'une seule pièce avec l'élément déflecteur d'air (15, 25, 35, 45), en particulier sous forme de lèvre d'étanchéité de largeur plus faible que des régions moyennes de l'élément déflecteur d'air (15, 25, 35, 45).

6. Système de becquet arrière (14) selon l'une quelconque des revendications précédentes, **caractérisé en ce qu'**il peut être placé entièrement à une porte arrière (6) ou aux deux portes arrière (6, 8) du véhicule (1) et dans la position de base, lors de l'ouverture de ladite au moins une porte arrière (6, 8) vers l'avant pour l'application sur la face extérieure (3, 4) du véhicule (1), il peut être logé entre la porte arrière (6, 8) et la face extérieure (3, 4).

7. Système de becquet arrière (14) selon l'une quelconque des revendications précédentes, **caractérisé en ce que** le dispositif de réglage (18, 28, 38, 48) est réalisé sous la forme d'un guidage forcé avec uniquement un degré de liberté pour le déplacement de l'élément déflecteur d'air (15, 25, 35, 45) entre la position de repos et la position de roulage.

8. Système de becquet arrière (14) selon la revendication 7, **caractérisé en ce que** le dispositif de réglage (18, 28, 38, 48) est réalisé sous la forme d'un quadrilatère articulé avec quatre articulations ou axes d'articulation (A, B, C, D), au moins une plaque oscillante principale (16, 26, 36, 46) de plus grande longueur (L1, L3) et au moins un rail secondaire (17, 27, 37, 47) de plus petite longueur (L2, L4), dans lequel la plaque oscillante principale (16, 26, 36, 46) et la plaque oscillante secondaire (17, 27, 37, 47) présentent respectivement une articulation avant (16a, 17a, 26a, 27a, 36a, 37a, 46a, 47a) pour la fixation à une porte arrière (6, 8) du véhicule (1).

9. Système de becquet arrière (14) selon la revendication 8, **caractérisé en ce que** l'articulation avant (17a, 27a, 37a, 47a) de la plaque oscillante secondaire (17, 27, 37, 47) peut être fixée à la porte arrière (6, 8) plus loin à l'extérieur en direction de la face extérieure (3, 4) du véhicule (1) que l'articulation avant (16a, 26a, 36a, 46a) de la plaque oscillante principale (16, 26, 36, 46).

10. Système de becquet arrière (14) selon la revendication 8 ou 9, **caractérisé en ce que** l'articulation arrière (17b, 27b, 37b, 47b) de la plaque oscillante secondaire (17, 27, 37, 47) est fixée plus loin à l'extérieur sur l'élément déflecteur d'air (15, 25, 35, 45) que l'articulation arrière (16b, 26b, 36b, 46b) de la plaque oscillante principale (16, 26, 36, 46) .

11. Système de becquet arrière (14) selon l'une quelconque des revendications 8 à 10, **caractérisé en ce qu'**un premier angle de pivotement (α1) de la plaque oscillante principale (16, 26, 36, 46) est plus petit qu'un second angle de pivotement (α2) de la plaque oscillante secondaire (17, 27, 37, 47).

12. Système de becquet arrière (14) selon l'une quelconque des revendications 8 à 10, **caractérisé en ce que** l'élément déflecteur d'air (15, 25, 35, 45) dans la position de base s'applique à plat sur la plaque oscillante secondaire (17, 27, 37, 47) et la plaque oscillante principale (16, 26, 36, 46) et sensiblement parallèlement à la porte arrière (6, 8) et dans la position de roulage il fait saillie sous un angle de position de roulage (α3) compris entre 0° et 90° par rapport à la porte arrière (6, 8).

13. Système de becquet arrière (14) selon l'une quelconque des revendications précédentes, **caractérisé en ce que** l'élément déflecteur d'air (15, 25, 35, 45) dans la position de roulage peut être pressé de façon étanche à la pression ou retenant une différence de pression sur la face extérieure (3, 4) du véhicule (1), pour la protection d'une zone intermédiaire (82) entre l'élément déflecteur d'air (15, 25, 35, 45) et la face extérieure (3, 4) à l'égard d'un espace extérieur (83) pouvant être traversé par le déplacement d'air.

14. Système de becquet arrière (14) selon l'une quelconque des revendications précédentes, **caractérisé en ce que** l'élément déflecteur d'air (15, 25) dans la position de roulage s'étend, à partir de sa région d'extrémité avant (54) en direction de l'arrière, d'abord en forme d'arc latéralement vers l'extérieur et s'étend ensuite latéralement vers l'intérieur jusque derrière une région arrière ou une porte arrière (8) du véhicule (1).

15. Véhicule (1) avec un système de becquet arrière (14) selon l'une quelconque des revendications précédentes, **caractérisé en ce que** dans la position de roulage, un espace intermédiaire (82) entre l'élément déflecteur d'air (15, 25) et la face extérieure (3, 4) est étanche par le moyen d'étanchéité (61) par rapport à un espace extérieur (83) du véhicule (1) pouvant être traversé par le déplacement d'air.

16. Véhicule (1) selon la revendication 15, **caractérisé en ce que** le dispositif de réglage (18, 28, 38, 48) dans la position de roulage presse le moyen d'étanchéité (61) prévu sur la région d'extrémité avant (54) de l'élément déflecteur d'air (15, 25) contre la face extérieure (3, 4) du véhicule, en particulier une paroi latérale (3), par exemple contre une bâche (80).

17. Véhicule (1) selon la revendication 15 ou 16, **caractérisé en ce que** le dispositif de réglage (18, 28, 38, 48) fait pivoter l'élément déflecteur d'air (15, 25) lors du déplacement dans la position de roulage avec sa région d'extrémité avant (54) de l'extérieur contre la face extérieure (3, 4).

18. Véhicule selon l'une quelconque des revendications 15 à 17, **caractérisé en ce que** des irrégularités ou des structures (81), par exemple un logement (81) pour une bâche ou une rainure, sont formées sur la face latérale (3) dans l'espace intermédiaire (82) séparé de l'élément déflecteur d'air (15, 25).
